# EUROPEAN PATENT APPLICATION

(11) **EP 4 312 302 A1**
(43) Date of publication of application: **31.01.2024**
(21) Application number: 23183411.0
(22) Date of filing: 04.07.2023
(51) Int. Cl.: H01M 50/15, H01M 50/176, H01M 50/188, H01M 50/193, H01M 50/55, H01M 50/553, H01M 50/191

(54) **BATTERY**

(30) Priority: 25.07.2022 JP 2022117877
(71) Applicant: Prime Planet Energy & Solutions, Inc., Chuo-ku Tokyo 103-0022 (JP)
(72) Inventor: OSHIMA, Kazuki, Tokyo, 103-0022 (JP)
(74) Representative: Kuhnen & Wacker Patent- und Rechtsanwaltsbüro PartG mbB

(57) **Abstract**

In accordance with a preferable one aspect of a battery herein disclosed, the battery comprising: an electrode body including respective electrodes of positive and negative electrodes; a battery case including an opening, and for accommodating the electrode body; a sealing plate including a terminal mounting hole, and for sealing the opening; a collector terminal electrically joined at one end thereof with any electrode of the positive and negative electrodes inside the battery case, and inserted at another end thereof through the terminal mounting hole to be exposed to an outer side surface of the sealing plate; and an insulating member for establishing an insulation between at least a part of the sealing plate and the collector terminal. A plurality of concave parts are existed at the sealing plate, and the concave part is filled with the insulating member opposed to the concave part.

## Description

### BACKGROUND

The present disclosure relates to a battery.

In recent years, a battery such as a lithium ion secondary battery has been preferably used for a portable power supply of a personal computer, a portable terminal, or the like, a power supply for driving a car such as an electric vehicle (BEV), a hybrid vehicle (HEV), or a plug-in hybrid vehicle (PHEV), or the like. Such a battery has, for example, an insulating member for insulating an electrode terminal and a sealing plate. For example, Japanese Patent Application Publication No. 2021-086813 discloses a battery with such a configuration.

### SUMMARY

Incidentally, a study by the present inventors indicates as follows: a running vehicle vibration at the time of fastening a module or after restraint may apply a force (which will be also hereinafter simply referred to as a "torque") acting on an electrode terminal with the rotation axis as the center; this may damage a junction part of the electrode terminal - an insulating member - a sealing plate or the insulating member.

The present disclosure was completed in view of such circumstances. It is the main object of the present disclosure to provide a battery preferably improved in reliability.

In order to implement such an object, the present disclosure provides a battery including: an electrode body including respective electrodes of positive and negative electrodes; a battery case including an opening, and for accommodating the electrode body; a sealing plate including a terminal mounting hole, and for sealing the opening; an electrode terminal electrically joined at one end thereof with any electrode of the positive and negative electrodes inside the battery case, and inserted at the other end thereof through the terminal mounting hole to be exposed to outside the sealing plate; and an insulating member for establishing an insulation between at least a part of the sealing plate and the electrode terminal. One or a plurality of concave parts are existed at at least any one of the sealing plate and the insulating member. When the concave part is existed at the sealing plate, the concave part is filled with the insulating member opposed to the concave part, and when the concave part is existed at the insulating member, the sealing plate opposed to the concave part is buried in the concave part.

Thus, when a concave part is provided at any one of the sealing plate and the insulating material, the load caused by the torque applied on the electrode terminal can be preferably received by the concave part. As a result of this, it is possible to disperse the torque applied on the electrode terminal. For this reason, it is possible to preferably suppress the damages of the junction part and the insulating member. Therefore, in accordance with the present disclosure, it is possible to provide a battery preferably improved in reliability.

### BRIEF DESCRIPTION OF THE DRAWINGS

FIG. 1 is a perspective view schematically showing a battery in accordance with a first embodiment;
FIG. 2 is a longitudinal cross sectional view along line II-II of FIG. 1;
FIG. 3 is a top view schematically showing a sealing plate of FIG. 1;
FIG. 4 is a top view schematically showing a sealing plate in accordance with a second embodiment;
FIG. 5 is a longitudinal cross sectional view along line V-V of FIG. 4;
FIG. 6 is a view corresponding to FIG. 2 in accordance with a third embodiment;
FIG. 7 is a view corresponding to FIG. 2 in accordance with a fourth embodiment; and
FIG. 8 is a schematic view showing a configuration of a second collar part of FIG. 7.

### DETAILED DESCRIPTION

Below, with reference to the accompanying drawings, some preferable embodiments of the technology herein disclosed will be described. Incidentally, matters necessary for executing the present disclosure, except for matters specifically referred to in the present specification (e.g., the general configuration and manufacturing process of a battery not characterizing the present disclosure) can be grasped as design matters of those skilled in the art based on the related art in the present field. The present disclosure can be executed based on the contents disclosed in the present specification and the technical common sense in the present field. Further, the embodiment herein described is naturally not intended to limit particularly the present disclosure.

Further, each drawing is a schematic drawing, and does not necessarily reflect an actual working product. Below, the members and portions producing the same action will be given the same reference numerals and signs, and an overlapping description thereon will be appropriately omitted or simplified. Herein, in the drawings, the front, the rear, the up, the down, the left, and the right are expressed as F, Rr, U, D, L, and R, respectively. However, the front, the rear, the up, the down, the left, and the right are only the directions for convenience of description, and do not limit the setting aspect of the battery, and the like. Further, a rotation direction D1 in the drawing is merely the direction for convenience of description, and does not limit the rotation direction of the collector terminal (electrode terminal). Then, the following description is not intended to limit the technology herein disclosed to the following embodiments. Further, in the present specification, it is assumed that the expression of "A to B" indicative of the range includes the meaning of A or more and B or less, and the meaning of "more than A" and "smaller than B".

Incidentally, in the present specification, the term "battery" is a term denoting an electric storage device capable of extracting an electric energy in general, and is a concept including a primary battery and a secondary battery. Further, in the present specification, the term "secondary battery" represents an electric storage device capable of repeatedly charging and discharging by transfer of electric charge carriers between a positive electrode and a negative electrode via an electrolyte in general. The electrolyte may be any of a liquid electrolyte (electrolyte solution), a gel electrolyte, and a solid electrolyte. Such a battery includes even a capacitor (physical battery) such as an electric double layer capacitor, and the like other than a so-called storage battery (chemical battery) such as a lithium ion secondary battery or a nickel hydrogen battery. Below, an embodiment targeted for a lithium ion secondary battery will be described.

### Configuration of Battery

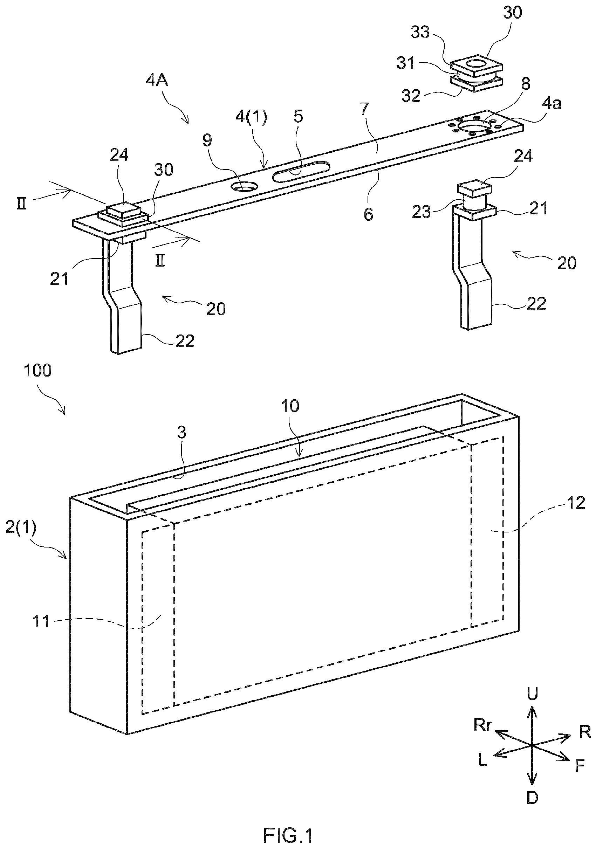

FIG. 1 is a perspective view schematically showing a battery 100. As shown in FIG. 1, the battery 100 includes a battery case 1, an electrode body 10, an electrode terminal (here, corresponding to a collector terminal 20), and an insulating member 30. In FIG. 1, an assembly component (which will be hereinafter referred to as a sealing plate assembly 4A) including the collector terminal 20 and the insulating member 30 integrally molded with a sealing plate 4 of one component of the battery case 1, and other components are shown separately. Further, in FIG. 1, for the negative electrode, the sealing plate 4, the collector terminal 20, and the insulating member 30 are shown separately.

The battery case 1 includes a case main body 2 and the sealing plate 4. The case main body 2 and the sealing plate 4 are examples of the case members forming the battery case 1. The case main body 2 accommodates the electrode body 10 and an electrolyte. The case main body 2 is a flat rectangular container in a shape of a substantially rectangular parallelepiped. Incidentally, in other embodiments, the shape of the battery case 1 may be other shapes such as a cylindrical shape. The case main body 2 is opened at one side surface between a pair of side surfaces forming the opposing broad surfaces. As the case main body 2, for example, the one made of a metal such as aluminum or an aluminum alloy can be used.

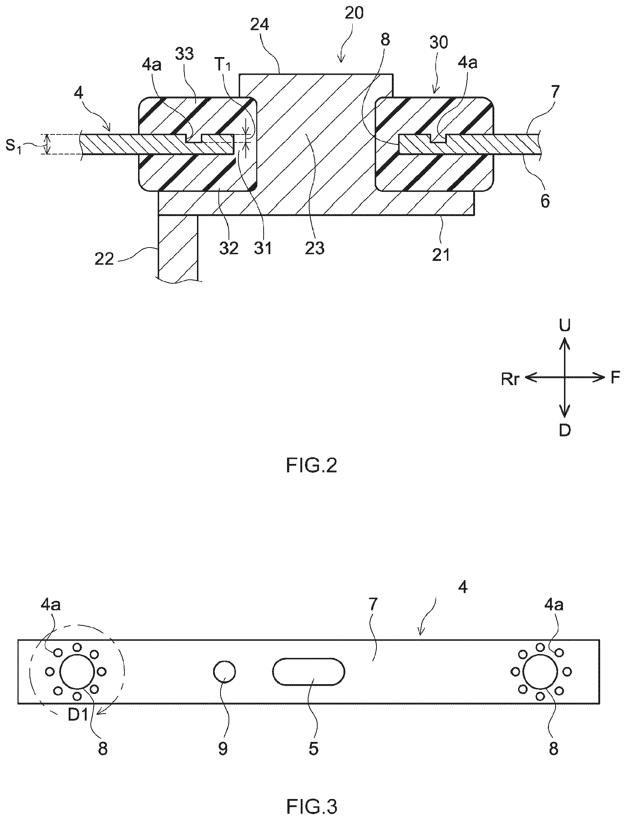

The sealing plate 4 is a member for sealing an opening 3 of the case main body 2. Although the separated state is shown in FIG. 1, with the finished product of the battery 100, the sealing plate 4 is joined with the periphery of the opening 3 of the case main body 2. As the sealing plate 4, for example, the one made of a metal such as aluminum or an aluminum alloy can be used. The sealing plate 4 has an inner side surface 6 facing the inner side of the battery 100, and an outer side surface 7 facing the outer side thereof. The sealing plate 4 also has a terminal mounting hole 8 penetrating through the inner side surface 6 and the outer side surface 7. The terminal mounting holes 8 are provided one on the positive electrode side of the sealing plate 4 and one on the negative electrode side thereof. The terminal mounting hole 8 establishes a communication between the inside and the outside of the battery case 1. Although the shape of the terminal mounting hole 8 is herein a cylindrical shape, the shape may be various shapes such as a rectangular shape. Although not particularly restricted, the thickness of the sealing plate 4 (see S₁ of FIG. 2) can be set at, for example, 0.5 mm or more. From the view point of ease of formation of a concave part 4a described later, the thickness is preferably 1 mm or more, and may be, for example, 2 mm or more. Further, the upper limit of the thickness of the sealing plate 4 is, for example, 10 mm or less. From the viewpoint of preferably keeping the volume capacity of the battery 100, the thickness is preferably 5 mm or less.

The sealing plate 4 is provided with a thin-walled safety valve 5 set so as to relax the internal pressure when the internal pressure of the battery case 1 increases to a prescribed level, or higher. Further, the battery case 1 is provided with an solution injection hole 9 for injecting an electrolyte.

The electrode body 10 is accommodated in the case main body 2. The electrode body 10 is accommodated in the case main body 2, for example, while being covered with an insulation film (not shown), or the like. The electrode body 10 includes a positive electrode sheet 11, a negative electrode sheet 12, and a separator sheet (not shown) arranged between the positive electrode sheet 11 and the negative electrode sheet 12. The positive electrode sheet 11, the negative electrode sheet 12, and the separator sheet are long band-shaped members, respectively. The positive electrode sheet 11, the negative electrode sheet 12, and the separator sheet are stacked one on another, and are wound in the case main body 2. Incidentally, the technology herein disclosed is also applicable to, for example, the case where the electrode body is a lamination type electrode body in which a positive electrode sheet and a negative electrode sheet are stacked one on another via a separator sheet. Further, as the positive electrode sheet and the negative electrode sheet, for example, those having a tab can be used.

The positive electrode sheet 11 is a member in which a positive electrode active material layer including a positive electrode active material is formed on each opposite surface of metal foil (e.g., aluminum foil) with preset width and thickness. Incidentally, in other embodiments, the positive electrode active material layer may be formed on only one surface of the positive electrode sheet. The positive electrode active material is, for example, a material capable of releasing lithium ions during charging and absorbing lithium ions during discharging as with a lithium transition metal composite material for a lithium ion secondary battery. Various positive electrode active materials have been generally proposed other than the lithium transition metal composite material, and have no particular restriction.

The negative electrode sheet 12 is a member in which a negative electrode active material layer including a negative electrode active material is formed on each opposite surface of metal foil (e.g., copper foil) with preset width and thickness. Incidentally, in other embodiments, the negative electrode active material layer may be formed on only one surface of the negative electrode sheet. The negative electrode active material is, for example, a material capable of occluding lithium ions during charging and releasing the lithium ions occluded during charging, during discharging as with natural graphite for a lithium ion secondary battery. Various negative electrode active materials have been generally proposed other than natural graphite, and have no particular restriction.

For the separator sheet, for example, a porous resin sheet having a required heat resistance, and through which an electrolyte can pass is used. Various separator sheets have also been proposed, and have no particular restriction.

As the electrolyte, a conventionally known one for use in this kind of battery can be used. For example, the one containing a support salt in an organic solvent (nonaqueous solvent) can be used.

The positive electrode sheet 11 wound in the case main body 2 is arranged such that one end thereof is in the vicinity of the left end in the case main body 2. The negative electrode sheet 12 is arranged such that one end thereof is in the vicinity of the right end in the case main body 2. Although FIG. 1 shows them in a separated state, the collector terminals 20 are welded one with the positive electrode sheet 11 and one with the negative electrode sheet 12 for a finished product of the battery 100.

The sealing plate assembly 4A is an assembly component including the sealing plate 4, the collector terminal 20, and the insulating member 30 assembled therein by integral molding (insert molding). Namely, the collector terminal 20 and the insulating member 30 are included as an integrally molded product. Such a configuration enables easy removal of the sealing plate assembly 4A, and hence is preferable from the viewpoint of workability. A part of the collector terminal 20 is arranged in the inside of the battery case 1, and the other part thereof is arranged in the outside of the battery case 1. Further, although not shown as described above, the collector terminal 20 is connected with the electrode body 10 in the inside of the battery case 1. Incidentally, the collector terminal 20 on the negative electrode side is formed of, for example, copper or a copper alloy. The collector terminal 20 on the positive electrode side is formed of, for example, aluminum or an aluminum alloy.

FIG. 2 is a cross sectional view of the vicinity of the terminal mounting hole 8 of the sealing plate 4. FIG. 2 is a II-II cross sectional view of FIG. 1. As shown in FIG. 2, the collector terminal 20 includes a base part 21, an electrode body connection part 22, a shaft part 23, and an outer connection part 24. Incidentally, below, the configuration of the vicinity of the terminal mounting hole 8 for extracting the electrode of the electrode body 10 to the outside of the battery case 1 will also be referred to as an "electrode extraction part".

The base part 21 is configured in a shape of a tetragonal planar sheet, and extends in the horizontal direction. As shown in FIG. 2, the longitudinal length of the base part 21 is longer than that of the terminal mounting hole 8. Although not shown, as for the lateral direction, the length of the base part 21 is longer than that of the terminal mounting hole 8. The base part 21 has a larger radial size than that of the terminal mounting hole 8.

The electrode body connection part 22 is arranged in the inside of the battery case 1, and is connected with the electrode body 10. As shown in FIG. 1, the electrode body connection part 22 is formed in a shape of a sheet, and extends from the rear end of the base part 21 downward. The electrode body connection part 22 is bent at the intermediate part toward the forward side. The electrode body connection part 22 extends downward again below the bent portion. The bending allows the tip of the electrode body connection part 22 to be situated at the central part of the base part 21 for the longitudinal direction.

The shaft part 23 is arranged between the electrode body connection part 22 and an outer connection part 24 arranged in the outside of the battery case 1, and is inserted through the terminal mounting hole 8. The shaft part 23 extends from the base part 21 upward. As shown in FIG. 2, the longitudinal direction of the shaft part 23 is shorter than those of the base part 21 and the terminal mounting hole 8. Although not shown, also for the lateral direction, the length of the shaft part 23 is shorter than those of the base part 21 and the terminal mounting hole 8. For this reason, the shaft part 23 is separated from the inner circumferential surface of the terminal mounting hole 8.

The outer connection part 24 is provided above the shaft part 23. The outer connection part 24 is exposed to the outer side surface 7 of the sealing plate 4. As shown in FIG. 2, the longitudinal length of the outer connection part 24 is shorter than those of the base part 21 and the terminal mounting hole 8, and is longer than that of the shaft part 23. Although not shown, also for the lateral direction, the length of the outer connection part 24 is shorter than those of the base part 21 and the terminal mounting hole 8, and is longer than that of the shaft part 23. The outer connection part 24 is configured with a size capable of being inserted through the terminal mounting hole 8. The shaft part 23 is formed in such a shape as to be constricted with respect to the base part 21 and the outer connection part 24 due to the difference in size among the base part 21, the shaft part 23, and the outer connection part 24.

The insulating member 30 establishes an insulation between at least a part of the sealing plate 4 and the collector terminal 20. Further, insulating member 30 is herein arranged with at least a part thereof inserted through the terminal mounting hole 8. In the present embodiment, the insulating member 30 is integrally molded with the sealing plate 4 and the collector terminal 20 so as to fill the space between the terminal mounting hole 8 and the collector terminal 20. The insulating member 30 has a tubular part 31 situated between the terminal mounting hole 8 and the shaft part 23 of the collector terminal 20, a first collar part 32 extending in the horizontal direction along the inner side surface 6 of the sealing plate 4, and a second collar part 33 extending in the horizontal direction along the outer side surface 7 of the sealing plate 4. The tubular part 31, the first collar part 32, and the second collar part 33 are integrally formed. As shown in FIG. 2, each longitudinal length of the first collar part 32 and the second collar part 33 is longer than that of an outer connection part 24. Although not shown, also for the lateral direction, each length of the first collar part 32 and the second collar part 33 is longer than that of the base part 21 and the outer connection part 24 of the collector terminal 20.

As shown in FIG. 3, in the present embodiment, a plurality of (herein, 8) concave parts 4a are formed at the outer side surface 7 of the sealing plate 4. However, the number of the concave parts 4a included in the sealing plate 4 is not limited thereto, and may be, for example, 1. Further, as shown in FIG. 2, the concave part 4a is filled with at least a part of the insulating member 30 opposed to the concave part 4a. With such a configuration, the load caused by the torque applied on the collector terminal 20 can be received by the concave part 4a. As a result of this, the torque applied on the collector terminal 20 can be dispersed. For this reason, it is possible to preferably suppress the damages of the junction part of the collector terminal 20 - the insulating member 30 - the sealing plate 4, and the insulating member 30. Incidentally the sealing plate 4 having the concave part 4a can be manufactured by, for example, a die.

Although not particularly restricted, the depth (see Ti of FIG. 2) of the concave part 4a is, for example, 1/10 or more of the thickness (see S₁ of FIG. 2) of the sealing plate 4 at the periphery of the concave part 4a. From the viewpoint of more preferable reception of the load, the thickness of the concave part 4a is preferably 1/5 or more, and may be, for example, 1/4 or more. Further, the upper limit of the depth of the concave part 4a is, for example, 1/2 or less, and may be 1/3 or less of the thickness of the sealing plate 4.

Although not particularly restricted, the area of the bottom surface per one concave part 4a is, for example, 1% or more when the area of the sealing plate 4 before provision of the hole and the concave part 4a of the outer side surface 7 is assumed to be 100%. From the viewpoint of more preferable reception of the load, the area is preferably 2% or more, and may be, for example, 3% or more. Further, the upper limit of the area of the bottom surface per one concave part 4a is, for example, 10% or less, and may be 7% or less, or 5% or less of the area of the outer side surface 7 of the sealing plate 4.

In the present embodiment, the concave parts 4a are respectively formed at the positions of point symmetry when the electrode terminal 20 is assumed to be the central point around the collector terminal 20 (see FIG. 3, in FIG. 3, the collector terminal 20 is not shown for convenience). With such a configuration, the load can be effectively received by the concave part 4a. For this reason, it is possible to more preferably suppress the damages of the junction part of the collector terminal 20 - the insulating member 30 - the sealing plate 4, and the insulating member 30. However, in other embodiments, the concave part 4a is not required to be formed at the position of point symmetry with the collector terminal 20 as the central point.

As shown in FIG. 3, in the present embodiment, the concave part 4a is in a shape of a circle as seen from the opening. However, the shape as seen from the opening of the concave part 4a is not limited thereto, and may be other various shapes such as an elliptical shape, a rectangular shape, and a triangular shape. When the shape as seen from the opening of the concave part 4a is a circular shape or an elliptical shape out of these, the shape has no corner part. For this reason, the shape can prevent the concentration of the stress to the corner part, and hence is preferable. Further, when the sealing plate includes a plurality of concave parts 4a present therein, the shapes as seen from the openings of the plurality of concave parts 4a may be all the same, or different.

The insulating member 30 is formed of, for example, a resin such as PFA (peralkoxy alkane) resin. However, the insulating member 30 may only be a material having moldability, insulating property, sealability, and a resistance to an electrolyte, and is not limited to a PFA resin. Other preferable examples of the material for the insulating member 30 may include a PPS (polyphenylene sulfide) resin. Incidentally, in consideration of the difference between the temperature at the time of molding of the insulating member 30 and the temperature of the battery 100 in use, the coefficient of linear expansion of the sealing plate 4 and the coefficient of linear expansion of the insulating member 30 are preferably closer to each other. Thus, preferably, to the insulating member 30, other than a PFA resin, or the like, a filler (e.g., an insulation filler) for adjusting the coefficient of linear expansion may be added.

Examples of such a filler may include a glass filler including a glass component as the main component. Herein, the wording "including a glass component as the main component" can mean that the glass component is contained in an amount of, for example, 90 mass% or more, 95 mass% or more, and 99 mass% or more (100 mass% is also acceptable) for every 100 mass% of the whole filler. Further, examples of the glass component may include SiO₂-Al₂O₃-CaO-SrO type glass, and SiO₂-B₂O₃-ZnO-Na₂O type glass. The average particle diameter of the glass filler can be set within the range of, for example, 1 µm to 20 µm and 5 µm to 10 µm. Incidentally, in the present specification, the term "average particle diameter" means, for example, the particle diameter equivalent to an integrated value of 50% from the smaller particle diameter side in the volume-based particle size distribution on the basis of laser diffraction / scattering method. As the glass filler, for example, a commercially available product can be used.

### Method for Manufacturing Battery

The battery 100 as described above can be manufactured by a manufacturing method including (1) a preparing step and (2) a laser welding step. Herein, the preparing step further includes (1A) an insert molding step.

In the (1) preparing step, the battery case 1 and the sealing plate 4 are prepared. Further, additionally, necessary members as described above are prepared. Herein, the sealing plate 4 includes a plurality of concave parts 4a in a shape of a circle as seen from the opening. The plurality of concave parts 4a are formed so as to be point symmetrical with respect to the collector terminal 20.

In the (1A) insert molding step, the sealing plate 4 is integrated with the collector terminal 20 and the insulating member 30, thereby manufacturing an assembly component (e.g., a sealing plate assembly 4A). The sealing plate assembly 4A can be manufactured by insert molding of the sealing plate 4, the collector terminal 20, and the insulating member 30. As a result of this, the number of components can be reduced, and a conduction path can be formed with more ease than with a conventional method using a rivet. Insert molding can be performed according to a conventionally known method as described in, for example, Japanese Patent Application Publication No. 2021-086813, Japanese Patent Application Publication No. 2021-086814, Japanese Patent No. 3986368, Japanese Patent No. 6648671, and the like. For example, using a molding die having a lower die and an upper die, manufacturing thereof can be performed by a method including a component setting step, a positioning step, an upper die setting step, an injection molding step, an upper die releasing step, and a component extracting step.

In the component setting step, after inserting the collector terminal 20 through the terminal mounting hole 8 of the sealing plate 4, the sealing plate 4 is mounted on the lower die. In the positioning step, the collector terminal 20 is positioned, and fixed. In the upper die setting step, the upper die is mounted so as to sandwich the sealing plate 4 and the collector terminal 20 together with the lower die. In the injection molding step, first, the molding die is heated. Then, a molten resin is injected into the molding die. The molten resin is poured from the upper die through the terminal mounting hole 8 to the lower die. Subsequently, the molding die and a molded product are cooled. As a result of this, the insulating member 30, the sealing plate 4, and the collector terminal 20 are integrated. In the upper die releasing step, the upper die is separated from the lower die. In the component extracting step, a molded product is removed from the lower die.

In the (2) laser welding step, after accommodating the electrode body 10 in the inside of the battery case 1, the sealing plate 4 is fitted to the opening 3 of the battery case 1. Then, the joint (fitting part) between the battery case 1 and the sealing plate 4 is welded and joined by laser. Incidentally, the kind of the laser light for use in laser welding and the conditions for laser welding may be the same as those in the related art, and have no particular restriction. Welding and joining of the fitting part throughout the whole circumference causes the sealing plate 4 and the battery case 1 to be welded without a gap. Subsequently, an electrolyte is injected from the solution injection hole 9, and the solution injection hole 9 is blocked by a sealing member, thereby hermetically sealing the battery 100. In the manner described up to this point, the battery 100 can be manufactured.

The battery 100 is usable for various applications, and can be preferably used as a power source (driving power supply) for a motor to be mounted on, for example, a vehicle such as a car or a truck. The kind of the vehicle has no particular restriction. Examples thereof may include a plug-in hybrid vehicle (PHEV; Plug-in Hybrid Electric Vehicle), a hybrid vehicle (HEV; Hybrid Electric Vehicle), and an electric vehicle (BEV; Battery Electric Vehicle). Further, the batteries 100 can be used as an assembled battery including a plurality of batteries 100.

Up to this point, some embodiments of the present disclosure have been described. The first embodiment is merely an example. The present disclosure can be executed additionally in various aspects. The present disclosure can be executed based on the contents disclosed in the present specification, and the technical common sense in the present field. The technology described in the appended claims includes various modifications and changes of the embodiment exemplified above. For example, a part of the embodiment can be replaced with another modified aspect, and another modified aspect can also be added to the embodiment. Further, the technical features can also be appropriately erased unless they are described as essential ones.

For example, in the first embodiment, on the positive electrode side and on the negative electrode side, a part of the insulating member 30 opposed to the concave part 4a is filled in the concave part 4a of the sealing plate 4. However, the present disclosure is not limited thereto. Only any one of the positive electrode side and the negative electrode side can be formed in such a configuration. Further, for example, in the first embodiment, the sealing plate assembly 4A is manufactured by integral molding (insert molding). However, the present disclosure is not limited thereto. The technology herein disclosed is also applicable to the sealing plate assembly manufactured by a method except for integral molding.

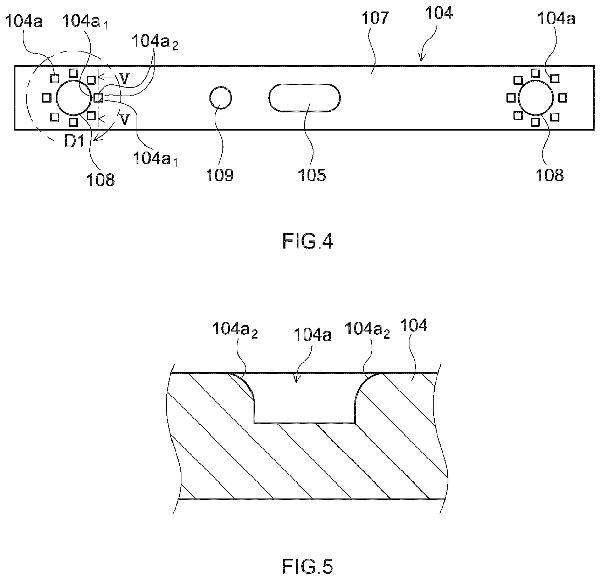

FIG. 4 is a top view schematically showing a sealing plate in accordance with a second embodiment. FIG. 5 is a schematic longitudinal cross section view along line V-V of FIG. 4. As shown in FIG. 4, a terminal mounting hole 108 is formed in a cylindrical shape. Further, a portion of the collector terminal 20 to be inserted through the terminal mounting hole 108 is formed in a cylindrical shape. As shown in FIG. 4 and FIG. 5, in the second embodiment, in each of the concave parts 104a, at at least the portion opposed to the rotation direction (D 1 direction of FIG. 4) with the central axis of the cylindrical portion of the collector terminal 20 as the center, the corner of the opening (herein, an edge 104a₂) is in an R shape. With such a configuration, relaxation of the stress applied to the concave part 104a and reinforcement of the strength of the junction part of the collector terminal 20 - the insulating member 30 - the sealing plate 104 can be more preferably implemented, and hence such a configuration is preferable. Incidentally, herein, the edges 104a₂ are formed at two sites in the direction D1. However, the edge 104a₂ may be formed at only one site. Further, although other edges 104ai are not each in an R shape, they may be, for example, each in an R shape. As for other configurations (e.g., the size and the depth) of the concave part 104a, the description of the concave part 4a can be appropriately referenced. Further, although not particularly restricted, the R size of the edge 104a₂ can be set at roughly 0.05 to 30 (e.g., 0.1 to 10). Incidentally, also for the case where the concave part 104a is another shape (e.g., a circular shape or an elliptical shape), at least the corner opposed to the direction D1 can be set in an R shape.

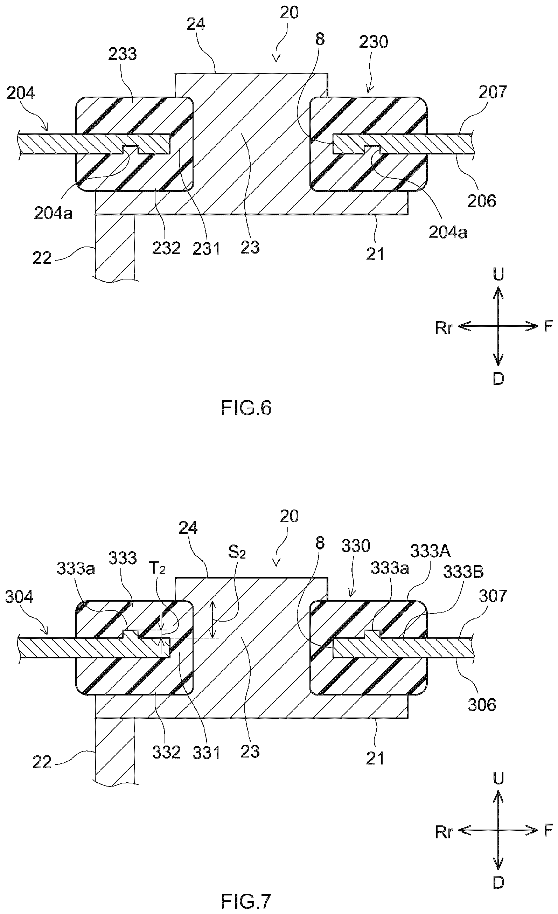

For example, in the first embodiment, the concave part 4a is formed on the outer side surface 7 of the sealing plate 4. However, the present disclosure is not limited thereto. Herein, FIG. 6 is a view corresponding to FIG. 2 in accordance with a third embodiment. As shown in FIG. 6, in the third embodiment, a concave part 204a is formed on an inner side surface 206 of the sealing plate 204. Incidentally, although not shown, the perspective view showing the sealing plate 204 of FIG. 6 can be said to be the one obtained by changing the expression of the outer side surface 7 of FIG. 3 to the inner side surface 6. Alternatively, in other embodiments, a concave part may be formed at the terminal mounting hole 8 included in the sealing plate 4. For the configuration of the concave parts (e.g., the size and the depth), the description of the concave part 4a can be appropriately referenced.

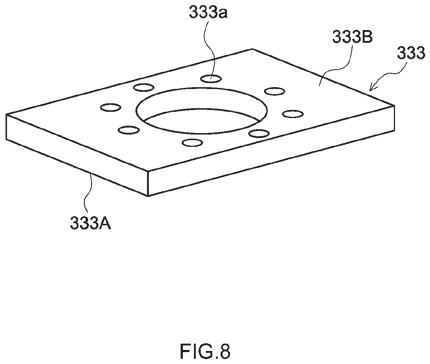

For example, in the first embodiment, the concave part 4a is formed at the sealing plate 4. However, the present disclosure is not limited thereto. Herein, FIG. 7 is a view corresponding to FIG. 2 in accordance with a fourth embodiment. FIG. 8 is a schematic view showing the configuration of the second collar part of FIG. 7. In FIG. 8, 333A represents the outer side surface of a second collar part 333, and 333B represents the inner side surface of the second collar part 333. As shown in FIG. 7 and FIG. 8, in the fourth embodiment, a plurality of (herein, 8) concave parts 333a are formed at an insulating member 330. In this case, a part of a sealing plate 304 opposed to the concave part 333a is buried in the concave part 333a. With such a configuration, the load caused by the torque applied on the collector terminal 20 can be preferably received by the concave part 333a. As a result of this, it is possible to disperse the torque applied to the collector terminal 20. For this reason, it is possible to preferably suppress the damages of the junction part of the collector terminal 20 - the insulating member 330 - the sealing plate 304, and the insulating member 330. Such a configuration can be implemented by, for example, die molding using a sealing plate having a convex part corresponding to the concave part 333a. Incidentally, the shape of the opening of the concave part can be set as various shapes as exemplified in the description of the concave part 4a. Further, at the concave part, at least the corner opposed in the direction D1 can be formed in an R shape.

Although not particularly restricted, the depth of the concave part 333a (see T₂ of FIG. 7) is, for example, 1/10 or more of the thickness (see S₂ of FIG. 7) of the second collar part 333 of the insulating member 330 at the periphery of the concave part 333a, and is preferably 1/5 or more, and may be, for example, 1/4 or more from the viewpoint of more preferably receiving the load as described above. Further, the upper limit of the depth of the concave part 333a is 1/2 or less, and may be, for example, 1/3 or less of the thickness of the second collar part 333. Further, although not particularly restricted, the thickness S₂ of the insulating member 330 (particularly, the second collar part 333) can be set at, for example, 1 mm or more, and is preferably 2 mm or more, and may be, for example, 3 mm or more from the viewpoint of ease of formation of the concave part 333a. Further, the upper limit of the thickness S₂ of the second collar part 333 is, for example, 10 mm or less, and may be 5 mm or less.

Although not particularly restricted, the area of the bottom surface per one concave part 333a is, for example, 1% or more for every 100% of the area before provision of the hole and the concave part 333a of the inner side surface 333B of the second collar part 333, and is preferably 2% or more, and may be, for example, 3% or more from the viewpoint of more preferably receiving the load. Further, the upper limit of the area of the bottom surface per one concave part 333a is, for example, 10% or less, and may be 7% or less or 5% or less of the area of the inner side surface 333B of the second collar part 333.

Incidentally, the configuration of combination of two or more of those of the first to fourth embodiments, can also preferably provide the effect of the technology herein disclosed. Further, 105, 306, and 109 correspond to 5, 6, and 9 of FIG. 1, respectively. Ref. Nos. 107, 207, and 307 correspond to 7 of FIG. 1, and 230, 231, and 331, and 232 and 332 correspond to 30, 31, and 32 of FIG. 1, respectively.

As described up to this point, as the specific aspects of the technology herein disclosed, mention may be made of those described in the following respective items.

Item 1: a battery comprising: an electrode body including respective electrodes of positive and negative electrodes; a battery case including an opening, and for accommodating the electrode body; a sealing plate including a terminal mounting hole, and for sealing the opening; an electrode terminal electrically joined at one end thereof with any electrode of the positive and negative electrodes inside the battery case, and inserted at another end thereof through the terminal mounting hole to be exposed to outside the sealing plate; and an insulating member for establishing an insulation between at least a part of the sealing plate and the electrode terminal, in which one or a plurality of concave parts are existed at at least any one of the sealing plate and the insulating member, and when the concave part is existed at the sealing plate, the concave part is filled with the insulating member opposed to the concave part, and when the concave part is existed at the insulating member, the sealing plate opposed to the concave part is buried in the concave part.

Item 2: The battery according to the item 1, in which when the concave part is existed at the sealing plate, a depth of the concave part is at least 1/5 of a thickness of the sealing plate at a periphery of the concave part, and when the concave part is existed at the insulating member, the depth of the concave part is at least 1/5 of a thickness of the insulating member at the periphery of the concave part.

Item 3: The battery according to item 1 or item 2, in which a plurality of the concave parts are existed at at least any one of the sealing plate and the insulating member, and the plurality of concave parts are respectively existed at respective positions of point symmetry when the electrode terminal is assumed to be a central point around the electrode terminal.

Item 4: The battery according to any one of item 1 to item 3, in which the one or plurality of concave parts are each in a circular shape or an elliptical shape as seen from an opening thereof.

Item 5: The battery according to any one of item 1 to item 4, in which the terminal mounting hole has a cylindrical shape, and a portion of the electrode terminal to be inserted through the terminal mounting hole has a cylindrical shape, and at each of the concave parts, at at least a portion opposed to a rotation direction of the cylindrical portion of the electrode terminal, a corner of an opening has an R shape.

Item 6: The battery according to any one of item 1 to item 5, in which the thickness of the sealing plate is 1 mm or more.

Item 7: The battery according to any one of item 1 to item 6, in which the insulating member includes an insulation filler.

Item 8: The battery according to any one of item 1 to item 7, in which the electrode terminal and the insulating member are included as an integrally molded product.

## Claims

1. A battery (100) comprising:
an electrode body (10) including respective electrodes of positive and negative electrodes;
a battery case (1) including an opening (3), and for accommodating the electrode body (10);
a sealing plate (4) including a terminal mounting hole (8), and for sealing the opening (3);
an electrode terminal (20) electrically joined at one end thereof with any electrode of the positive and negative electrodes inside the battery case (1), and inserted at another end thereof through the terminal mounting hole (8) to be exposed to outside the sealing plate (4); and
an insulating member (30) for establishing an insulation between at least a part of the sealing plate (4) and the electrode terminal (20),
wherein one or a plurality of concave parts (4a) are existed at at least any one of the sealing plate (4) and the insulating member (30),
when the concave part (4a) is existed at the sealing plate (4), the concave part (4a) is filled with the insulating member (30) opposed to the concave part (4a), and
when the concave part (4a) is existed at the insulating member (30), the sealing plate (4) opposed to the concave part (4a) is buried in the concave part (4a).

2. The battery (100) according to claim 1, wherein
when the concave part (4a) is existed at the sealing plate (4), a depth of the concave part (4a) is at least 1/5 of a thickness of the sealing plate (4) at a periphery of the concave part (4a), and
when the concave part (4a) is existed at the insulating member (30), the depth of the concave part (4a) is at least 1/5 of a thickness of the insulating member (30) at the periphery of the concave part (4a).

3. The battery (100) according to claim 1 or 2, wherein
a plurality of the concave parts (4a) are existed at at least any one of the sealing plate (4) and the insulating member (30), and
the plurality of concave parts (4a) are respectively existed at respective positions of point symmetry when the electrode terminal (20) is assumed to be a central point around the electrode terminal (20).

4. The battery (100) according to any one of claims 1 to 3, wherein the one or plurality of concave parts (4a) are each in a circular shape or an elliptical shape as seen from an opening (3) thereof.

5. The battery (100) according to any one of claims 1 to 4, wherein
the terminal mounting hole (8) has a cylindrical shape,
a portion of the electrode terminal (20) to be inserted through the terminal mounting hole (8) has a cylindrical shape, and
at each of the concave parts (4a), at at least a portion opposed to a rotation direction of the cylindrical portion of the electrode terminal (20), a corner of an opening (3) has an R shape.

6. The battery (100) according to any one of claims 1 to 5, wherein the thickness of the sealing plate (4) is 1 mm or more.

7. The battery (100) according to any one of claims 1 to 6, wherein the insulating member (30) includes an insulation filler.

8. The battery (100) according to any one of claims 1 to 7, wherein the electrode terminal (20) and the insulating member (30) are included as an integrally molded product.
